# EUROPÄISCHE PATENTSCHRIFT

(11) **EP 1 858 771 B1**
(45) Veröffentlichungstag und Bekanntmachung des Hinweises auf die Patenterteilung: **04.05.2011**
(21) Anmeldenummer: 06705366.0
(22) Anmeldetag: 01.03.2006
(51) Int. Cl.: B65D 47/24, B65D 47/12

(54) **MEHRTEILIGER KUNSTSTOFFVERSCHLUSS**
MULTIPART PLASTIC CLOSURE
FERMETURE EN PLASTIQUE A PLUSIEURS PARTIES

(30) Priorität: 09.03.2005 CH 405052005
(43) Veröffentlichungstag der Anmeldung: 28.11.2007
(73) Patentinhaber: Fostag Holding AG, 8260 Stein am Rhein (CH)
(72) Erfinder: MATHIS, Lorenz, A-6824 Schlins (AT)
(74) Vertreter: Schneider Feldmann AG Patent- und Markenanwälte
(86) Internationale Anmeldenummer: PCT/CH2006/000126
(87) Internationale Veröffentlichungsnummer: WO 2006/094415

(56) Entgegenhaltungen:
- EP-A- 1 332 859
- US-A- 5 072 863
- US-A- 5 772 076

## Beschreibung

Die vorliegende Erfindung betrifft einen mehrteiligen Kunststoffverschluss mit einem auf einem Behältnis aufsetzbaren Unterteil, der eine Ausgussmündung aufweist, welche über dem Dichtungsbereich mit dem Behältnis hinaus nach oben sich erstreckt und eine Ringwand mit einem Aussengewinde aufweist, auf welcher eine Schraubkappe zwischen einer unteren Dichtposition und einer oberen Offenposition schraubbar gehalten ist.

Verschlüsse der eingangs genannten Art werden auf Trinkflaschen angebracht und sind aus der EP 1332859 bekannt. Die Ausgussmündung ist so gestaltet, dass der Benutzer aus dem Trinkbehälter trinken kann, ohne den Verschluss zu entfernen, wobei er den Mündungsbereich des Verschlusses direkt in den Mund oder auf den Mund nimmt. Verschlüsse, die nach diesem Konzept gebaut worden sind, sind ursprünglich als sogenannte Push-Pull-Verschlüsse konzipiert worden, die ein einhändiges Öffnen beziehungsweise Schliessen des Verschlusses erlauben, so dass ein Sportler den Verschluss auch während des Laufens oder Fahrradfahrens öffnen oder schliessen kann, indem er den Verschluss in den Mund nimmt und an der Flasche zieht, so dass eine Kappe von einer Schliessposition in eine Öffnungsposition verschoben wird, und ein zentraler Dichtstift eine zentrische Öffnung frei gibt.

Neben diesem gängigsten Typ solcher Trinkverschlüsse sind weitere derartige mehrteilige Kunststoffverschlüsse auf dem Markt erschienen, die heute üblicherweise als Sports-Cap bekannt sind.

Während bisher Verschlüsse dieser Art immer nur für kohlensäurefreie Getränke zum Einsatz kamen, werden seit kurzem auch Getränke für Sportler angeboten, die kohlensäurehaltig sind. Die kohlensäurehaltigen Getränke wirken erfrischender, und dieser Effekt führt dazu, dass Freizeitsportler daher auch mehr trinken, was aus gesundheitlichen Gründen wünschbar ist.

Bei kohlensäurehaltigen Getränken entsteht selbstverständlich im Behältnis ein Überdruck, der mehrere Bar betragen kann. Bei den bekannten "Push-Pull"-Verschlüssen führt der Innendruck zu einem Öffnungseffekt des Verschlusses, der entsprechend zu einer Undichtigkeit führt, die nicht allein zu einem Abbau des Kohlensäuregehaltes führt, sondern sogar zu einem Ausfliessen der Flüssigkeit. Je nach Lage des Behältnisses liegt der Gasdruck bezogen auf den Kunststoffverschluss nämlich hinter dem darin befindlichen Getränk und drückt dieses durch den Verschluss nach aussen.

Dieses Problem wurde erkannt und entsprechend sind Kunststoffverschlüsse angeboten worden, die konzeptionell den bisherigen Push-Pull-Verschlüssen entsprechen, jedoch schraubbar sind und entsprechend einen höheren Innendruck standhalten.

Ein Verschluss der eingangs genannten Art ist aus der WO-01/27021 bekannt. Ist das Gewinde eines solchen Verschlusses als selbsthemmendes Gewinde konzipiert, so sollte sich der Verschluss nicht öffnen können, auch wenn sich ein relativ hoher Innendruck aufbaut. Es hat sich jedoch gezeigt, dass auch bei dieser Art von Verschlüssen die Kohlensäure entweicht, auch wenn der Verschluss praktisch immer verschlossen bleibt. Der Grund hierfür wird darin vermutet, dass der Innendruck im Behältnis praktisch direkt auf der Deckfläche der Schraubkappe aufliegt. Die Konstruktion des hier gezeigten Verschlusses besitzt ein auf einem Behältnis aufsetzbares Unterteil und hat eine Ausgussmündung, welche über den Dichtungsbereich mit dem Behältnis hinaus nach oben sich erstreckt und eine Ringwand mit einem Ausgussgewinde aufweist, auf welche die erwähnte Schraubkappe aufgesetzt ist. Die Ausgussmündung hat hier jedoch einen Dichtungszapfen, der mittels radialen Rippen zentrisch oberhalb der Ringwand gehalten ist, während die Schraubkappe eine Deckfläche mit einer Trinköffnung aufweist, in die der erwähnte Zapfen im geschlossenen Zustand dichtend eingreift. In diesem Falle aber liegt der Innendruck, der um den Dichtzapfen herum direkt mit der Schraubkappe kommunizierend vorhanden ist, auch an der Aussenwand und der Deckfläche der Schraubkappe an. Dieser Innendruck führt zu einer Verformung der Deckfläche und der Mantelwand der Schraubkappe, wodurch sowohl Gas um den Dichtzapfen herum nach aussen zu gelangen vermag, wie auch dass dabei die Schraubkappe nicht mehr dichtend auf der Ausgussmündung gehalten ist und damit sogar Flüssigkeit über diesen Bereich nach aussen gelangt, insbesondere wenn das Behältnis beim Sport treiben geschüttelt wird und der Innendruck entsprechend hoch ist.

Es ist daher die Aufgabe der vorliegenden Erfindung, einen mehrteiligen Kunststoffverschluss der eingangs genannten Art zu schaffen, bei dem die beschriebenen Nachteile behoben sind.

Diese Aufgabe löst ein Kunststoffverschluss gemäss der Erfindung mit den Merkmalen des Patentanspruches 1. Weitere vorteilhafte Ausgestaltungsformen des Erfindungsgegenstandes gehen aus den abhängigen Patentansprüchen hervor, und deren Gestaltung und Funktion wird in der nachfolgenden Beschreibung unter Bezug auf die anliegenden Zeichnungen erläutert. Es zeigt:

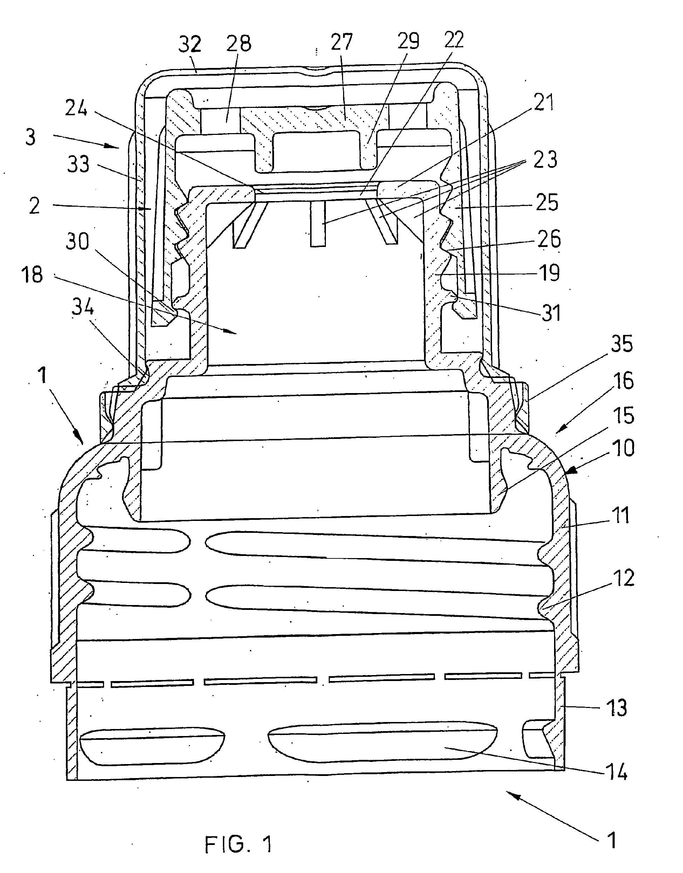

- Figur 1: eine erste Ausführungsform in einem vertikalen Diametralschnitt, wobei der Verschluss in seiner Offenposition gezeigt ist, mit einer übergestülpten Schutzkappe, während
- Figur 2: einen ähnlichen Verschluss wie in Figur 1 zeigt, unter Weglassung der erwähnten Schutzkappe.

Beim erfindungsgemässen mehrteiligen Kunststoffverschluss handelt es sich hierbei um einen Verschluss, der üblicherweise aus drei Teilen besteht, nämlich einem Unterteil 1, der auf einen Behälterhals aufschraubbar ist und mit diesem eine dichtende Verbindung eingeht, einer Schraubkappe 2, die auf dem Unterteil 1 gehalten ist und von einer geschlossenen Position in eine offene Position und umgekehrt schraubbar ist, sowie eine die Schraubkappe 2 überdeckende und auf dem Unterteil 1 form- und kraftschlüssig gehaltene Schutzkappe 3.

Der Unterteil 1 weist zwei übereinander angeordnete Bereiche auf, nämlich einen Befestigungsbereich 10, mittels dem der Unterteil 1 auf einem Behälterhals befestigbar ist und die Dichtung zwischen Unterteil und Behälter herstellt, sowie einen darüber angeordneten Bereich, der als Ausgussmündung 18 bezeichnet ist. Der Befestigungsbereich 10 des Unterteils 1 umfasst im Wesentlichen eine umlaufende Schürze 11, in der ein Innengewinde 12 angebracht ist. An den unteren Rand der Schürze 11 ist über Sollbruchstellenbrücken ein Garantieband 13 angeformt, welches mittels Rückhaltewulst 14 gesichert am Behältnis gehalten ist. Oberhalb der Schürze 11 schliesst eine Schulter an, welche einen Dichtungsbereich 16 umfasst. In diesem Dichtungsbereich 16 ist eine Behälterhalsinnendichtlippe 15 angeformt, die im montierten Zustand des Verschlusses auf einem Behälter den Verschluss gegenüber dem Behälterhals innen anliegend dichtet. Auf der Aussenseite wird der Behälterhals durch eine Ringdichtwulst nochmals gedichtet. Ein anliegender Innendruck im Behältnis, auf das der Verschluss aufgesetzt ist, wirkt folglich so, dass die Behälterhalsinnendichtlippe 15 durch den Innendruck nach aussen auf die Behälterhalsinnenwand gedrückt wird und damit den Dichteffekt verbessert.

Oberhalb des bereits erwähnten Befestigungsbereiches 10 des Unterteils 1 ist einstückig damit verbunden eine Ausgussmündung 18 aufgesetzt. Diese Ausgussmündung 18 hat eine zylindrische Form und wird seitlich von einer Ringwand 19 gebildet, die oben von einer Deckfläche 21 begrenzt wird. Die Ringwand 19 besitzt ein Aussengewinde 20. Zentrisch in der Deckfläche 21 ist eine Ausgussmündung 22 eingeformt. Auf dem Aussengewinde 20 der Ausgussmündung 18 ist die bereits eingangs erwähnte Schraubkappe 2 aufgeschraubt. Die Schraubkappe 2 weist eine Kappenmantelwand 25 auf, die mit einem entsprechenden Innengewinde 26 versehen ist, welche mit dem Aussengewinde 20 an der Ringwand 19 hängt. Die Schraubkappe 2 besitzt wiederum eine Deckfläche 27, welche die Kappenmantelwand 25 abschliesst. In der Deckfläche 27 der Schraubkappe 2 ist mindestens eine, vorteilhafterweise jedoch zwei oder vier Trinköffnungen 28 eingeformt. An der Unterseite der Deckfläche 27 ist ein zentraler Zapfen 29 angespritzt, der formschlüssig in die zentrale Ausgussöffnung 22 passt. Entsprechend weist die zentrale Ausgussöffnung 22 Dichtrippen und/oder Dichtrillen 24 auf.

Im geschlossenen Zustand des Verschlusses ist die Schraubkappe 2 soweit hinunter geschraubt, dass der Zapfen 29 mindestens annähernd vollständig in der zentralen Ausgussöffnung 22 dichtend eingeschoben ist. In diesem Zustand liegt die Deckfläche 27 der Schraubkappe 2 praktisch annähernd auf der Deckfläche 21 der Ausgussmündung 18 auf. Wirkt nun der Innendruck des Behälters, so liegt dieser Innendruck auch unten an der Deckfläche 21 der Ausgussmündung 18 an. Um weitgehend Deformationen unter Druckeinfluss zu vermeiden, ist die verbleibende ringförmige Deckfläche 21 mit einer Vielzahl von Versteifungsmitteln 23 versehen. Diese Versteifungsmittel 23 sind rippenartig gestaltet und bilden eine zusätzliche Verbindung zwischen der Deckfläche 21 und der Ringwand 19 der Ausgussmündung 18. Eine verbleibende geringfügige Verformung unter der Wirkung des anliegenden Innendrucks kann nun lediglich dazu führen, dass die Deckfläche 21 mit einem gewissen Restdruck auf die Unterseite der Deckfläche 27 der Schraubkappe 2 wirkt. Hierbei wird folglich die ringförmige Deckfläche 21 so verformt, dass diese praktisch dichtend auf die Trinköffnungen 28 aufliegt. Die Schraubkappe 2 besitzt zusätzlich noch eine untere endständige Rückhaltewulst 30. Diese Rückhaltewulst 30 verhindert ein Abschrauben der Schraubkappe 2. Entsprechend ist an der Ausgussmündung 18 unterhalb des Aussengewindes 20 ein ringförmiger Anschlag 31 angeformt. In dieser oberen Öffnungsstellung des Verschlusses liegt der Zapfen 29 vollständig ausserhalb der zentralen Ausgussöffnung 22 distanziert über derselben. Damit ist ein Durchfluss frei, der ein bequemes Trinken ermöglicht. Die maximale Distanz des Zapfens 29 oberhalb der Ausgussmündung 22 ist konstruktiv so wählbar, dass der Durchfluss auch nur reduziert möglich ist, um damit sicherzustellen, dass nicht zuviel Inhalt pro Zeiteinheit ausströmen kann.

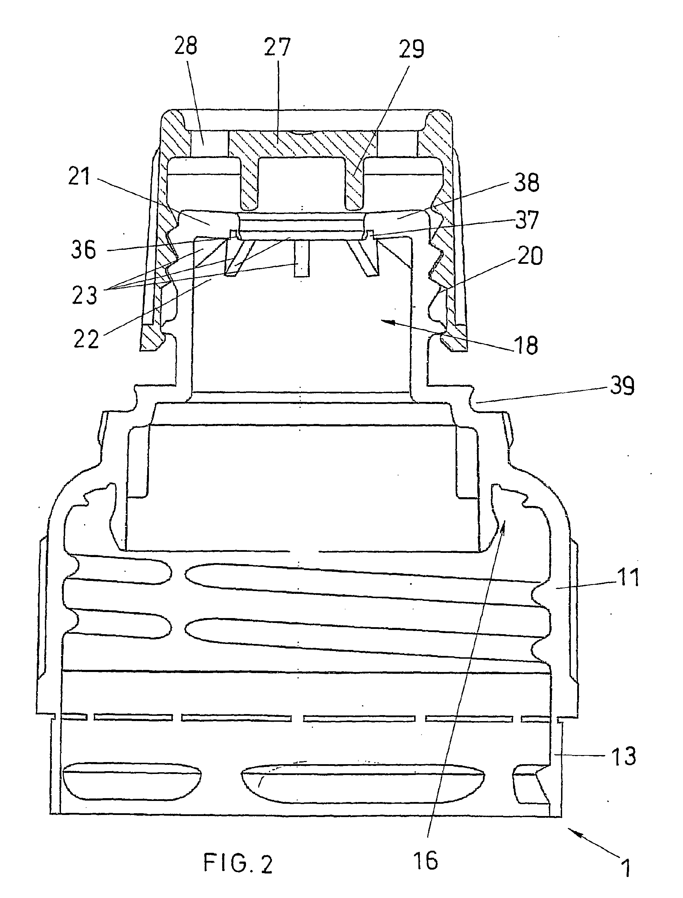

Über der Schraubkappe 2 ist eine Schutzkappe 3 vorgesehen, die in der Figur 2 zur Entlastung der Zeichnung weggelassen wurde. Die Schutzkappe 3 übernimmt keine Druckkräfte und ist lediglich kraftschlüssig aufgestülpt. Die Schutzkappe 3 hat eine Schutzkappendeckfläche 32, an die eine umlaufende Schutzkappenmantelwand 33 anschliesst. An der Schutzkappenmantelwand 33 ist endständig eine Haltewulst 34 angeformt, die in eine entsprechende Haltenut 39 eingreift. Nach aussen versetzt und über Sollbruchstellen mit der Mantelwand 33 verbunden ist ein Garantieband 35 angeformt. Dieses Garantieband 35 dient der Unversehrtheitsgarantie und wird bei der Erstöffnung entfernt oder verbleibt in dieser Position und wird lediglich abgetrennt.

Zur Verbesserung der Dichtung zwischen der Deckfläche 21, die wie bereits erwähnt praktisch nur eine ringförmige Deckfläche 38 ist, und dem Zapfen 29 ist die zentrale Ausgussöffnung 22 mit einer umgebenden zur Behälterinnenseite gerichteten Dichtlippe 36 vorgesehen. Damit auf dieser Dichtlippe 36 der volle Innendruck wirksam sein kann, ist umlaufend um die Dichtlippe 36 eine Ringnut 37 vorgesehen.

Durch die erfindungsgemässe Gestaltung des Verschlusses wird der gesamte Innendruck des Behältnisses auf zwei Teile aufgeteilt, nämlich einerseits auf die ringförmige Deckfläche 38 der Ausgussmündung 18 und andererseits auf die relativ kleine Fläche der Dichtfläche 27 im Bereich innerhalb des Dichtzapfens 29. Der Zapfen 29 wirkt dabei zusätzlich noch als Verstärkung der Deckfläche 27 der Schraubkappe 2. Hiermit wird im Gegensatz zu bekannten Verschlüssen dieser Art der Innendruck des Behältnisses besser aufgeteilt und mögliche Verformungen durch den anliegenden Innendruck werden durch die erwähnten Versteifungsmittel 23 sowie die Versteifung durch den Zapfen 29 aufgenommen.

### Bezugszeichenliste:

- 1: Unterteil
- 2: Schraubkappe
- 3: Schutzkappe
- 10: Befestigungsbereich des Unterteils
- 11: umlaufende Schürze
- 12: Innengewinde
- 13: Garantieband
- 14: Rückhaltewülste
- 15: Behälterhalsinnendichtlippe
- 16: Dichtungsbereich
- 17: Ringdichtwulst
- 18: Ausgussmündung
- 19: Ringwand
- 20: Aussengewinde
- 21: Deckfläche
- 22: zentrale Ausgussöffnung
- 23: Versteifungsmittel
- 24: Dichtrippen und -rillen
- 25: Kappenmantelwand
- 26: Innengewinde
- 27: Deckfläche der Schraubkappe
- 28: Trinköffnung
- 29: Zapfen
- 30: endständige Rückhaltewulst
- 31: ringförmiger Anschlag
- 32: Schutzkappendeckfläche
- 33: Schutzkappenmantelwand
- 34: Haltewulst
- 35: Garantieband
- 36: Dichtlippe
- 37: Ringnut
- 38: ringförmige Deckfläche

## Patentansprüche

1. Mehrteiliger Kunststoffverschluss mit einem auf einem Behältnis aufsetzbaren Unterteil (1), der eine Ausgussmündung (18) aufweist, welche über den Dichtungsbereich (16) mit dem Behältnis hinaus nach oben sich erstreckt und eine Ringwand (19) mit einem Aussengewinde (20) aufweist, auf welchen eine Schraubkappe (2) zwischen einer unteren Dichtposition und einer oberen Offenposition schraubbar gehalten ist, und dass die Schraubkappe (2) mit einer zentralen dichtend in die Ausgussöffnung (22) in geschlossenem Zustand des Verschlusses eingreifenden Zapfen (29) versehen ist, und mindestens eine zwischen der Kappenmantelwand (25) der Schraubkappe (2) und dem zentrischen Zapfen angeordnete Trinköffnung (28) aufweist. **dadurch gekennzeichnet, dass** die Ausgussmündung (18) eine an die Ringwand (19) anschliessende Deckfläche (21, 38) mit einer zentralen Ausgussöffnung (22) aufweist, wobei rippenartige Versteifungsmittel (23) vorhanden sind, die eine Verbindung zwischen der Ringwand (19) und der Deckfläche (21) bilden und eine Verformung der Ausgussmündung (18) unter Einfluss eines Innendruckes verhindern.

2. Mehrteiliger Kunststoffverschluss nach Anspruch 1, **dadurch gekennzeichnet, dass** die Schraubkappe (2) an seiner Innenseite der umlaufenden Wand eine endständige Rückhaltewulst (30) aufweist, welche zusammen wirkt mit einem ringförmigen Anschlag (31), welcher die Ringwand (19) unterhalb des Aussengewindes (20) umgibt und ein Abschrauben der Kappe verhindert.

3. Mehrteiliger Kunststoffverschluss nach Anspruch 1, **dadurch gekennzeichnet, dass** die Ausgussöffnung (22) mit Dichtmitteln versehen ist, die mit dem Zapfen der Schraubkappe (2) zusammen wirken.

4. Mehrteiliger Kunststoffverschluss nach Anspruch 3, **dadurch gekennzeichnet, dass** das Dichtmittel eine an der Unterseite der Deckfläche angeformte, die Ausgussöffnung randständig umgebende Dichtlippe (36) ist.

5. Mehrteiliger Kunststoffverschluss nach Anspruch 4, **dadurch gekennzeichnet, dass** die Deckfläche (21) an seiner Unterseite eine angrenzend an der Dichtlippe (36) verlaufende Ringnut (37) aufweist.

6. Mehrteiliger Kunststoffverschluss nach Anspruch 1, **dadurch gekennzeichnet, dass** das Unterteil (1) mit einem Garantieband (35) versehen ist.

7. Mehrteiliger Kunststoffverschluss nach Anspruch 1, **dadurch gekennzeichnet, dass** eine Schutzkappe (3) vorhanden ist, welche über die Schraubkappe (2) hinweg auf dem Unterteil (1) kraft- und/oder formschlüssig aufstülpbar ist.

8. Mehrteiliger Kunststoffverschluss nach Anspruch 7, **dadurch gekennzeichnet, dass** die Schutzkappe (3) mit einem Garantieband (35) versehen ist und auf dem Unterteil (1) des mehrteiligen Kunststoffverschlusses gehalten ist.

9. Mehrteiliger Kunststoffverschluss nach Anspruch 1, **dadurch gekennzeichnet, dass** mehrere Trinköffnungen (28) vorhanden sind, die so angeordnet sind, dass sie in geschlossenem Zustand des Verschlusses mindestens annähernd dichtend auf die verbleibende ringförmige Deckfläche (38) der Ausgussmündung (18) aufliegen.

## Claims

1. A multi-part plastic closure with a lower part (1) which can be placed on a container and has a spout orifice (18) which extends upwardly beyond the sealing region (16) with the container and has an annular wall (19) with an external thread (20), onto which a screw cap (2) is held in a screwable manner between a lower sealing position and an upper open position, and the screw cap (2) is provided with a central catch (29) engaging in a sealing manner into the spout opening (22) in the closed state of the closure and has at least one drinking opening (28) arranged between the cap cover wall (25) of the screw cap (2) and the central catch, **characterised in that**, adjoining the annular wall (19), the spout orifice (18) has a top area (21, 38) with a central spout opening (22), wherein rib-like reinforcing means (23) are present, which form a connection between the annular wall (19) and the top area (21) and prevent a deforming of the spout orifice (18) under the action of an internal pressure.

2. The multi-part plastic closure according to Claim 1, **characterised in that** the screw cap (2) has a terminal retaining bead (30) on its internal side of the circumferential wall, which interacts with an annular stop (31) which surrounds the annular wall (19) below the external thread (20) and prevents unscrewing of the cap.

3. The multi-part plastic closure according to Claim 1, **characterised in that** the spout opening (22) is provided with sealing means which interact with the catch of the screw cap (2).

4. The multi-part plastic closure according to Claim 3, **characterised in that** the sealing means is a sealing lip (36) moulded on the lower side of the top area, which marginally surrounds the spout opening.

5. The multi-part plastic closure according to Claim 4, **characterised in that** the top area (21) has an annular groove (37) running adjacently to the sealing lip (36) at its lower side.

6. The multi-part plastic closure according to Claim 1, **characterised in that** the lower part (1) is provided with a tamper-evident strip (35).

7. The multi-part plastic closure according to Claim 1, **characterised in that** a protective cap (3) is present, which can be pushed on the lower part (1) in a form-fitting or force-fitting manner over the screw cap (2).

8. The multi-part plastic closure according to Claim 7, **characterised in that** the protective cap (3) is provided with a tamper-evident strip (35) and is held on the lower part (1) of the multi-part plastic closure.

9. The multi-part plastic closure according to Claim 1, **characterised in that** a plurality of drinking openings (28) are present, which are arranged in such a manner that they bear at least in an approximately sealing manner on the remaining annular top area (38) of the spout orifice (18) in the closed state of the closure.

## Revendications

1. Fermeture en matière plastique en plusieurs éléments, avec une partie inférieure (1) applicable sur un contenant, qui comporte un bec verseur (18) lequel s'étend vers le haut, pardessus la zone d'étanchéité (16) avec le contenant et comporte une paroi annulaire (19) avec un filetage (20) sur lequel, un capuchon à visser (2) est maintenu par vissage entre une position inférieure étanche et une position supérieure ouverte et le capuchon à visser (2) est muni d'un bouchon (29) central s'engageant en assurant l'étanchéité dans le bec verseur (22), à l'état fermé de la fermeture et comporte au moins une ouverture pour boire (28) disposée entre la paroi d'enveloppe de capuchon (25) du capuchon à visser (2) et le bouchon central, **caractérisée en ce que** le bec verseur (18) comporte une surface de recouvrement (21, 38) se raccordant sur la paroi annulaire (19) avec un orifice verseur (22), des moyens de renfort (23) de type nervures étant présents, lesquels permettent une liaison entre la paroi annulaire (19) et la surface de recouvrement (21) et empêchent une déformation du bec verseur (18) sous l'influence d'une pression interne.

2. Fermeture en matière plastique en plusieurs éléments selon la revendication 1, **caractérisée en ce que** sur sa face interne de la paroi périphérique, le capuchon à visser (2) comporte un bourrelet de retenue (30) terminal, qui coopère avec une butée annulaire (31), laquelle entoure la paroi annulaire (19) en dessous du filetage (20) et empêche un dévissage du capuchon.

3. Fermeture en matière plastique en plusieurs éléments selon la revendication 1, **caractérisée en ce que** l'orifice verseur (22) est muni de moyens d'étanchéité qui coopèrent avec le bouchon du capuchon à visser (2).

4. Fermeture en matière plastique en plusieurs éléments selon la revendication 3, **caractérisée en ce que** le moyen d'étanchéité est une lèvre d'étanchéité (36) rapportée sur la face inférieure de la surface de recouvrement, entourant l'orifice verseur sur son bord.

5. Fermeture en matière plastique en plusieurs éléments selon la revendication 4, **caractérisée en ce que** la surface de recouvrement (21) comporte sur sa face inférieure une rainure annulaire (37) s'étendant en étant adjacente à la lèvre d'étanchéité (36).

6. Fermeture en matière plastique en plusieurs éléments selon la revendication 1, **caractérisée en ce que** la partie inférieure (1) est munie d'une bande de garantie (35).

7. Fermeture en matière plastique en plusieurs éléments selon la revendication 1, **caractérisée en ce qu'**un capuchon protecteur (3) est présent, lequel est susceptible d'être enfoncé par complémentarité de force et/ou de forme sur la partie inférieure (1) par dessus le capuchon à visser (2).

8. Fermeture en matière plastique en plusieurs éléments selon la revendication 7, **caractérisée en ce que** le capuchon protecteur (3) est muni d'une bande de garantie (35) et est maintenu sur la partie inférieure (1) de la fermeture en matière plastique en plusieurs éléments.

9. Fermeture en matière plastique en plusieurs éléments selon la revendication 1, **caractérisée en ce que** plusieurs ouvertures pour boire (28) sont présentes, lesquelles sont disposées de sorte qu'à l'état fermé de la fermeture, elles s'appliquent en assurant au moins une étanchéité approximative sur la surface de recouvrement (38) annulaire restante du bec verseur (18).
